# EUROPÄISCHE PATENTSCHRIFT

(11) **EP 0 628 516 B1**
(45) Veröffentlichungstag und Bekanntmachung des Hinweises auf die Patenterteilung: **23.07.1997**
(21) Anmeldenummer: 94106743.1
(22) Anmeldetag: 29.04.1994
(51) Int. Cl.: C02F 1/20, C02F 1/72

(54) **Verfahren und Vorrichtung zum katalytischen Entfernen von Sauerstoff aus Wasser**
Method and installation for catalytic elimination of oxygen from water
Méthode et dispositif pour l'élimination catalytique de l'oxygène dissous dans l'eau

(30) Priorität: 10.05.1993 DE 4315520
(43) Veröffentlichungstag der Anmeldung: 14.12.1994
(73) Patentinhaber: STEAG AG, D-45128 Essen (DE)
(72) Erfinder: Maxein, Hans-Georg, Dipl.-Ing., D-45475 Mülheim/Ruhr (DE)

(56) Entgegenhaltungen:
- EP-A- 0 145 262
- EP-A- 0 316 569
- DE-C- 365 665
- US-A- 3 052 527

## Beschreibung

Die Erfindung betrifft ein Verfahren und eine Vorrichtung zum katalytischen Entfernen von Sauerstoff aus Wasser, wobei Wasserstoff in das Wasser eingeleitet und dieses sodann durch ein Katalysatorbett hindurchgeleitet wird.

Wasser mit niedrigem Restgehalt an Sauerstoff benötigt man beispielsweise als Speisewasser für Dampferzeuger, für Heizkreisläufe, in der Mikro-Elektronik, ferner als Prozeßwasser in der chemischen Industrie sowie als Injektionswasser bei der Offshore-Ölförderung.

Gegenüber thermischen Verfahren und Vakuum-Entgasungssystemen stellt die katalytische Sauerstoffentfernung insoweit eine Weiterentwicklung dar, als mit geringem Platzaufwand und verminderten Betriebskosten gearbeitet werden kann. Auch ist der Wartungsaufwand gering, da Förderpumpen die einzigen beweglichen Anlagenteile bilden. Das anfallende Reaktionsprodukt besteht ausschließlich aus Wasser und ist dementsprechend umweltfreundlich. Der Wirkungsgrad des Verfahrens ist über einem breiten Temperaturbereich annähernd konstant. Auch wird das Verfahren nicht durch einenetwaigen Salzgehalt des zu reinigenden Wassers beeinträchtigt.

Der Wasserstoff als Reaktionsmittel kann nur dann wirksam werden, wenn er sich auf der Oberfläche der Partikel des Katalysatorbettes anlagert. Bei diesen Partikeln handelt es sich vorzugsweise um palladiumdotierte Anionentauscher auf Basis Divinylbenzol und Polystyrol. Eine Anlagerung bzw. Reaktion setzt voraus, daß der Wasserstoff in dem zu entgasenden Wasser gelöst ist. Hierzu leitet man das Wasser, wie aus der Praxis bekannt, durch einen Wasserstoff-Verteiler und sodann durch einen externen statischen Mischer, bevor man es von oben nach unten durch das als Festbett arbeitende Katalysatorbett hindurchströmen läßt.

Ein vergleichbares Verfahren ist aus der EP-A-0 145 262 bekannt, bei dem Wasserstoff und Rohwasser in einen gemeinsamen Mischer eingeleitet werden. Das Gemisch wird sodann von einer Pumpe durch eine Katalysatorsäule gefördert, wobei es die Säule von oben nach unten durchströmt.

Es wurde gefunden, daß die katalytische Entfernung von Sauerstoff aus Wasser verbesserungsfähig ist. Dementsprechend liegt der Erfindung die Aufgabe zugrunde, die Wirksamkeit der katalytischen Sauerstoffentfernung zu erhöhen, und zwar insbesondere bezüglich Wirkungsgrad und Reaktionszeit.

Zur Lösung dieser Aufgabe ist das Verfahren nach der Erfindung dadurch gekennzeichnet, daß das Wasser von unten nach oben durch das Katalysatorbett hindurchgeleitet wird, wobei letzteres im Gegenstrom als Schwebebett betrieben wird.

Hierbei arbeitet das Katalysatorbett gleichzeitig als Mischer und entfaltet dabei eine optimale Wirksamkeit. Nach dem Durchtritt des Wassers durch einen unterhalb des Katalysatorbettes befindlichen Düsenboden ist die Lösung des Wasserstoff noch nicht vollständig. Vielmehr wird der Lösungsvorgang beim Durchströmen des Katalysatorbettes abgeschlossen. Da sich das Katalysatorbett im Schwebebettzustand befindet, sind ca. 20-25% des Palladiumharzes im Schwebezustand, während ca. 80-75% als Festbett an einem oberen Düsenboden angesiedelt sind. Aus der Gegenstrom-Durchströmung dieses Katalysatorbettes resultiert eine intensive Anlagerung des Wasserstoffs auf der Oberfläche der Katalysatorpartikel. Wasserstoffbläschen, die die Katalysator-Wirkung beeinträchtigen könnten, werden nahezu ausgeschlossen. Auch besteht nicht mehr die Gefahr, daß sich - wie beim Gleichstromverfahren - oberhalb des Katalysatorbettes eine Wasserstoffblase bildet, die entlüftet werden muß, wobei der Wasserstoff für die gewünschte Reaktion verlorengeht.

Insgesamt ergibt sich eine deutliche Verbesserung der Aktivität bzw. der Katalysefähigkeit des Wasserstoff zum Katalysator hin. Der gasförmige Wasserstoff wird mit Überdruck in das System eingeleitet, wobei die Gegenstromfahrweise beim Durchströmen des Schwebebettes, dessen Dichte nach oben hin zunimmt und die eines Festbettes erreicht, das Bestreben des Wasserstoffgases, in Flußrichtung zu expandieren, unterstützt. Es ergibt sich ein optimaler Kontakt mit dem Katalysator, d.h., die maximale Aktivität der Wasserstoffsättigung am Katalysator erfolgt sehr schnell.

Ferner kann auf den bisher erforderlichen Rückspülraum, der immerhin das 1 bis 1,2fache des Bettvolumens beträgt, verzichtet werden. Dies in Verbindung mit dem Fortfall des gesonderten statischen Mischers und des diesem vorgeschalteten Wasserstoff-Verteilers führt zu einer beträchtlichen Raumersparnis.

Das Katalysatorbett stellt ein vergrößertes Mischsystem dar und bewirkt eine Verkürzung der Anfahr- und Abfahrzeiten sowie eine Verkürzung der erforderlichen Reaktionszeit. Der Wasserstoffverbrauch wird praktisch überschußfrei auf das stöchiometrisch erforderliche Maß reduziert. Das Verfahren arbeitet also mit sehr gutem Wirkungsgrad, wobei ohne weiteres ein Restsauerstoffgehalt von < 10ppb erzielbar ist.

Vorzugsweise wird beim Einleiten des Wasserstoffs in das Wasser der Druck des Wasserstoffs höher eingestellt als der des Wassers. Dieser Druckunterschied bewirkt, daß nicht in Lösung getretener Wasserstoff nach dem unteren Düsenboden durch die darüber befindliche Schwebebettschicht und anschließend durch die am oberen Düsenboden angesiedelte Festbettschicht hindurchgedrückt wird. Dadurch ist sichergestellt, daß beim Durchtritt durch das Festbett in jedem Fall die Katalyse wirksam wird. Dies trägt zur Reduzierung des Wasserstoffüberschusses gegenüber dem bekannten Gleichstromverfahren bei. Letzteres führt zu einem Druckaufbau des nicht in Lösung gegangenen Wasserstoffs oberhalb des Katalysatorbettes. Dieser Druckaufbau bedingt eine Sicherheitseinrichtung zur Druckentlastung mit einer zur Atmosphäre führenden Entlastungsleitung. Eine deutliche Verschlechterung des angestrebten stöchiometrischen Stoffumsatzes des Wasserstoffs ist daher beim Gleichstromverfahren die Folge. Beim Gegenstromverfahren hingegen kann die Entlastungsleitung in den meisten Betriebsanwendungen entfallen.

Die Erfindung schafft ferner eine Vorrichtung zum katalytischen Entfernen von Sauerstoff aus Wasser, mit einem Behälter, einem in dem Behälter angeordneten ersten Düsenboden, einem in dem Behälter über dem ersten Düsenboden angeordneten Katalysatorbett, einer an den Behälter angeschlossenen Zuführeinrichtung für sauerstoffbeladenes Wasser und Wasserstoff und mit einer an den Behälter angeschlossenen Auslaßleitung für gereinigtes Wasser.

Eine derartige Vorrichtung ist aus der Praxis bekannt. Sie arbeitet mit einem Wasserstoff-Verteiler, der dazu dient, den Wasserstoff in das mit Sauerstoff beladene Wasser einzutragen. Anschließend wird ein externer statischer Mischer durchströmt, der für eine Einmischung des Wasserstoffs in das Wasser sorgt. Daran schließt sich dann der Behälter an, der das Katalysatorbett enthält. Der Behälter wird von oben nach unten durchströmt.

Um die Wirksamkeit der katalytischen Sauerstoffentfernung zu erhöhen, ist die Vorrichtung nach dem Oberbegriff des Patentanspruchs 3 dadurch gekennzeichnet, daß die Zuführeinrichtung unterhalb des ersten Düsenbodens und die Auslaßleitung oberhalb des Katalysatorbettes an den Behälter angeschlossen ist, wobei der Behälter vorteilhafterweise unterhalb der Auslaßleitung und oberhalb des Katalysatorbettes einen zweiten Düsenboden aufweist, so daß sich das Schwebebett hier anlagern und im oberen Bereich die Dichte eines Festbettes erreichen kann. Diese Vorrichtung läßt einen Betrieb des Katalysatorbettes im Gegenstrom als Schwebebett zu. Hieraus resultiert ein sehr guter Wirkungsgrad der katalytischen Sauerstoffentfernung, wobei mit sehr kurzen Reaktionszeiten gearbeitet werden kann.

Der erste oder untere Düsenboden arbeitet als Vermischungs- und Wasserverteilungsstufe für die nachfolgende Schwebebettschicht. Diese erfüllt die Funktion einer ersten Reaktionszone und lockeren Vermischungsschicht. Daran schließt sich die am zweiten oder oberen Düsenboden angesiedelte Festbettschicht an, die eine zweite Reaktionszone und feste Vermischungsschicht bildet. Unterstützt durch die Druckdifferenz zwischen dem Wasserstoff und dem Wasser, steigen die nicht in Lösung gegangenen Wasserstoffbläschen auf, wobei sie zwangsweise durch die Festbettschicht hindurchgedrückt werden. Die Festbettschicht gewährleistet, daß die Wasserstoffbläschen im Zuge des Druckausgleichs sich ständig mit den einzelnen Partikeln des Katalysatorbettes in Reaktionskontakt befinden.

Die Zuführeinrichtung für das sauerstoffbeladene Wasser und den Wasserstoff kann aus zwei gesonderten Leitungen bestehen, die am Boden des Behälters münden. Vorteilhafterweise hingegen ist es, eine Einlaßleitung für das sauerstoffbeladene Wasser vorzusehen, in der eine Wasserstoffleitung mündet. Wasser und Reagens treten also gemeinsam in den Behälter ein und strömen bereits einigermaßen gleichmäßig verteilt dem Schwebebett zu.

Als erfindungswesentlich offenbart gelten auch solche Kombinationen der erfindungsgemäßen Merkmale, die von den vorstehend diskutierten Verknüpfungen abweichen.

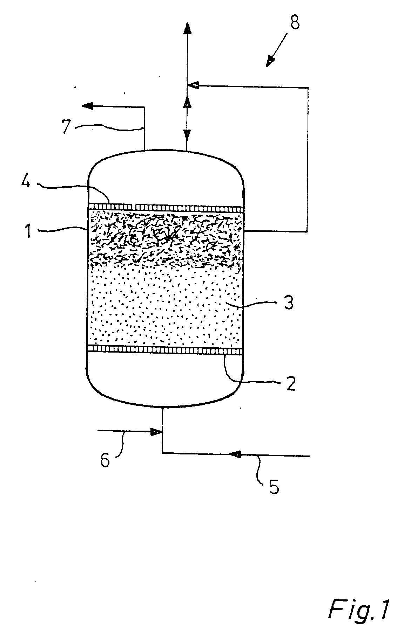

Die Erfindung wird im folgenden anhand eines bevorzugten Ausführungsbeispiels einer erfindungsgemäßen Vorrichtung näher erläutert. Die Figur zeigt eine schematische Darstellung der Vorrichtung.

Die Vorrichtung umfaßt einen Behälter 1, in welchem ein erster Düsenboden 2 angeordnet ist. Oberhalb des Düsenbodens befindet sich ein Katalysatorbett 3.

Wenn die Vorrichtung außer Betrieb ist, ruht das Katalysatorbett 3 auf dem Düsenboden 2. Im dargestellten Betriebszustand wirkt das Katalysatorbett 3 als von unten nach oben durchströmtes Schwebebett. Es wird aufgeschwämmt, wobei es sich an einen zweiten Düsenboden 4 anlegt, und zwar mit nach oben hin zunehmender Dichte. Dabei bildet es eine untere Schwebebettschicht, die ca. 20-25% des Katalysatormaterials enthält, und eine obere Festbettschicht, die den Rest des Katalysatormaterials enthält. Das Katalysatorbett besteht aus Polystyrolkugeln, die eine Palladiumbeschichtung tragen.

Das sauerstoffbeladene Wasser gelangt durch eine Einlaßleitung 5 unten in den Behälter 1 hinein. In der Einlaßleitung 5 mündet eine Wasserstoffleitung 6. Der gasförmige Wasserstoff, der unter höherem Druck steht als das sauerstoffbeladene Wasser, tritt also gemeinsam mit diesem in den Behälter 1 ein. Beim Durchströmen des als Schwebebett arbeitenden Katalysatorbettes 3 erfolgt dann eine innige Vermischung des Wasserstoffs mit dem zu reinigenden Wasser. Dabei geht der Wasserstoff vollständig in Lösung. Dies ist die Voraussetzung dafür, daß der Wasserstoff an der Palladiumschicht der Schwebebettpartikel adsorbiert wird. Der adsorbierte Wasserstoff kann mit dem im Wasser enthaltenen Sauerstoff reagieren, wobei als einziges Reaktionsprodukt Wasser entsteht.

Die Einmischung und Lösung des Wasserstoffs sowie dessen Adsorption sind intensiv und vollständig. Die Wasserstoffmenge kann also auf den stöchiometrischen Bereich eingestellt werden. Dementsprechend hoch ist der Wirkungsgrad der Sauerstoffentfernung, und zwar bei kurzer Reaktionszeit. Auch kommt es beim Anfahren der Vorrichtung sehr schnell zu einer Sättigung des Katalysatorbettes.

Oberhalb des Katalysatorbettes 3 ist eine Auslaßleitung 7 für gereinigtes Wasser an den Behälter 1 angeschlossen. Ferner verfügt der Behälter 1 über ein Entlüftungssystem 8, über welches im Störfalle Wasserstoff abgezogen werden kann.

Im Rahmen der Erfindung sind durchaus Abwandlungsmöglichkeiten geben. So kann man das Wasser und den Wasserstoff getrennt voneinander in den unteren Bereich des Behälters einleiten. Ferner kann der Behälter unterhalb des unteren Düsenbodens mit zusätzlichen Mischeinrichtungen versehen sein. Das Entlüftungssystem stellt ein fakultatives Merkmal dar, auf das unter Umständen verzichtet werden kann. Anstelle einer einzigen Auslaßleitung für gereinigtes Wasser sind auch deren mehrere möglich.

## Patentansprüche

1. Verfahren zum katalytischen Entfernen von Sauerstoff aus Wasser, wobei Wasserstoff in das Wasser eingeleitet und dieses sodann durch ein Katalysatorbett hindurchgeleitet wird,
**dadurch gekennzeichnet,**
daß das Wasser von unten nach oben durch das Katalysatorbett hindurchgeleitet wird, wobei letzteres im Gegenstrom als Schwebebett betrieben wird.

2. Verfahren nach Anspruch 1, dadurch gekennzeichnet, daß beim Einleiten des Wasserstoffs in das Wasser der Druck des Wasserstoffs höher eingestellt wird als der des Wassers.

3. Vorrichtung zum katalytischen Entfernen von Sauerstoff aus Wasser, mit
einem Behälter (1),
einem in dem Behälter angeordneten ersten Düsenboden (2),
einem in dem Behälter über dem ersten Düsenboden angeordneten Katalysatorbett (3),
einer an den Behälter angeschlossenen Zuführeinrichtung (5, 6) für sauerstoffbeladenes Wasser und Wasserstoff
und mit einer an den Behälter angeschlossenen Auslaßleitung (7) für gereinigtes Wasser,
wobei
die Zuführeinrichtung (5, 6) unterhalb des ersten Düsenbodens und die Auslaßleitung (7) oberhalb des Katalysatorbettes (3) an den Behälter (1) angeschlossen ist.

4. Vorrichtung nach Anspruch 3, dadurch gekennzeichnet, daß der Behälter (1) unterhalb der Auslaßleitung (7) und oberhalb des Katalysatorbettes (3) einen zweiten Düsenboden (4) aufweist.

5. Vorrichtung nach Anspruch 3 oder 4, dadurch gekennzeichnet, daß die Zuführeinrichtung eine Einlaßleitung (5) für sauerstoffbeladenes Wasser aufweist, in der eine Wasserstoffleitung (6) mündet.

## Claims

1. Process for the catalytic removal of oxygen from water, wherein hydrogen is introduced into the water and this is then conducted through a catalyser bed, characterised thereby that the water is conducted from below to above through the catalyser bed, wherein the latter is operated in counterflow as a suspension bed.

2. Process according to claim 1, characterised thereby that on introduction of the hydrogen into the water the pressure of the hydrogen is set to be higher than that of the water.

3. Device for the catalytic removal of oxygen from water, with
a container (1),
a first nozzle base (2) arranged in the container,
a catalyser bed (3) arranged in the container above the first nozzle base,
a feed device (5, 6) for oxygen-charged water and hydrogen connected to the container,
and with an outlet duct (7) for purified water connected to the container,
wherein
the feed device (5, 6) is connected to the container (1) below the first nozzle base and the outlet duct (7) is connected to the container (1) above the catalyser bed (3).

4. Device according to claim 3, characterised thereby, that the container (1) has a second nozzle base (4) below the outlet duct (7) and above the catalyser bed (3).

5. Device according to claim 3 or 4, characterised thereby that the feed device has an inlet duct (5), into which a hydrogen duct (6) opens, for oxygen-charged water.

## Revendications

1. Procédé pour l'élimination catalytique de l'oxygène dans l'eau, où de l'hydrogène est introduit dans l'eau et conduit à travers un lit de catalyseur, caractérisé an ce que l'eau est conduite du bas en haut à travers le lit du catalyseur, celui-ci étant utilisé à contre-courant en tant que lit flottant.

2. Procédé selon la revendication 1, caractérisé en ce qu'à l'introduction de l'hydrogène dans l'eau, la pression de l'hydrogène est établie à une valeur plus élevée que celle de l'eau.

3. Dispositif pour l'élimination catalytique de l'oxygène de l'eau, avec
un récipient (1),
un premier fond à tuyères (2), agencé dans le récipient,
un lit de catalyseur (3) agencé dans le récipient, au-dessus du premier fond à tuyères,
un dispositif d'amenée (5, 6), raccordé au récipient, pour l'eau chargée d'oxygène et l'hydrogène
et avec une conduite de sortie (7) raccordée au récipient pour l'eau épurée,
où
le dispositif d'amenée (5, 6) est raccordé en dessous du premier fond à tuyères et la conduite de sortie (7) au dessus du lit de catalyseur (3), au récipient (1).

4. Dispositif selon la revendication 3, caractérisé en ce que le récipient (1) présente, en dessous de la conduite de sortie (7) et au dessus du lit de catalyseur, (3) un second fond à tuyères (4).

5. Dispositif selon la revendication 3 ou 4, caractérisé en ce que le dispositif d'amenée présente une conduite d'entrée (5) pour l'eau chargée d'oxygène, où débouche une conduite d'hydrogène (6).
